# EUROPÄISCHE PATENTSCHRIFT

(11) **EP 2 527 614 B1**
(45) Veröffentlichungstag und Bekanntmachung des Hinweises auf die Patenterteilung: **22.04.2015**
(21) Anmeldenummer: 12181610.2
(22) Anmeldetag: 20.08.2008
(51) Int. Cl.: F02B 29/04, F02M 35/10, F02B 27/02, F02B 31/06, F02M 35/108

(54) **Saugrohr für einen Verbrennungsmotor**
Intake pipe for a combustion engine
Tubulure d'admission pour moteur à combustion interne

(30) Priorität: 27.08.2007 DE 102007040661
(43) Veröffentlichungstag der Anmeldung: 28.11.2012
(62) Teilanmeldung aus: 08801629.0
(73) Patentinhaber: MAHLE Behr GmbH & Co. KG, 70469 Stuttgart (DE)
(72) Erfinder: Müller, Rolf, 71711 Steinheim (DE); Pantow, Eberhard, 71364 Winnenden (DE); Spieth, Michael, 72810 Gomaringen (DE)
(74) Vertreter: Grauel, Andreas

(56) Entgegenhaltungen:
- EP-A- 1 496 221
- EP-A1- 1 983 171
- WO-A-02/40853
- WO-A-2008/061694
- DE-A1- 10 239 110
- DE-A1- 10 254 016
- DE-A1-102004 047 975
- DE-C- 665 315
- DE-C1- 3 815 991
- JP-A- 62 247 122

## Beschreibung

Die vorliegende Erfindung betrifft ein Saugrohr für einen Verbrennungsmotor nach dem Oberbegriff des Anspruchs 1.

DE 102 54 016 A1 beschreibt eine Vorrichtung zur Kühlung von Ladeluft eines Verbrennungsmotors, bei der gemäß einem Ausführungsbeispiel ein indirekter Ladeluftkühler als Baueinheit mit einem Saugrohr eines Verbrennungsmotors ausgeführt ist, wobei zudem der Ladeluftkühler über einen Bypasskanal umgeben ist und die Umgehung über eine stromaufwärts des Bypass angeordnete Stellklappe wählbar ist. Eine Drosselklappe ist stromabwärts von Ladeluftkühler und Bypasskanal angeordnet.

EP 1 496 221 A2 und DE 665 315 C beschreiben weitere Verbrennungsmotoren mit Ladeluftkühlung.

Es ist die Aufgabe der Erfindung, ein Saugrohr für einen Verbrennungsmotor anzugeben, mittels dessen eine verbesserte Verbrennung insbesondere im unteren Drehzahlbereich ermöglicht ist.

Diese Aufgabe wird für ein eingangs genanntes Saugrohr erfingdungsgemäß mit den kennzeichnenden Merkmalen des Anspruchs 1 gelöst. Durch die Anordnung des Endes des Bypasskanals in strömungsrelevant ausreichender Nähe der Ventilöffnung des Einlassventils kann die Beströmung derVentilöflnung unterschiedlich in Abhängigkeit davon ausgelegt werden, ob die Luft durch den Bypasskanal oder durch den Hauptkanal zugeführt wird oder auch in Anteilen durch beide Kanäle. Durch diese kanalabhängig unterschiedliche Anströmung des Einlassventils wird entsprechend eine unterschiedliche Verwirbelung des in den Zylinder einströmenden Gases erzielt, so dass eine Optimierung in Abhängigkeit des Betriebszustandes des Motors ermöglicht ist. Unter dem Begriff der Strömungsrelevanz im Sinne der Erfindung ist dabei zu verstehen, dass die Verteilung der Flussdichte und/oder Richtung der Strömung über die Ventilöffnung bei gleicher Gesamtströmung verschieden ist, je nachdem, ob Hauptkanal oder Bypasskanal durchströmt werden.

Insbesondere bevorzugt beträgt dabei der Abstand des motorseitigen Endes des Bypasskanals nicht mehr als etwa das Siebenfache, besonders vorteilhaft nicht mehr als etwa das Vierfache eines Durchmessers des Einlassventils, um eine ausreichende Beeinflussung der Gasströmungen in Abhängigkeit von der Wahl des Bypasskanals oder des Hauptkanals sicherzustellen,

In allgemein bevorzugter Ausführungsform ist der Bypasskanal als Tumble - oder Drallkanal des Saugrohrs ausgebildet. Es ist aus dem Stand der Technik bekannt, Einlasskanäle von Verbrennungsmotoren in mehrere Teilkanäle aufzuteilen und mit einer Stellklappe entsprechend anzusteuern, wobei ein als Tumble- oder Drallkanal gestalteter Tellkanal einen kontrollierten Wirbel des Gases bei Eintritt in die Verbrennungskammer bewirkt, was zumeist über eine einseitige Anströmung des Einlassventils erreicht wird. Erfindungsgemäß Sinne der Ausbildung eines Tumble- oder Dralikanals ist es dabei vorgesehen, dass der Bypasskanal unmittelbar vor einer gekrümmt verlaufenden Wandfläche eines Einlasskanals des Verbrennungsmotors endet. Eine solche gekrümmte Wandfläche, die z. B. eine Umlenkung des Gases um etwa 90 Grad bewirken kann, bewirkt eine zusätzliche Beaufschlagung des Gasstroms mit einem Drall.

Zur einfachen Anpassung eines erfindungsgemäßen Saugrohrs an übliche Geometrien von Einlasskanälen von Zylinderköpfen ist der Bypasskanal erfindungsgemäß bezüglich einer Öffnungsebene des Einlassventils oberhalb des Hauptkanals angeordnet. Alternativ, jedoch nicht erfindungsgemäß, kann es aber auch vorgesehen sein, dass der Bypasskanal bezüglich einer Öffnungsebene des Einlassventils unterhalb des Hauptkanals angeordnet ist.

Eine geeignete Beeinflussung der Gasströmung kann in einer vorteilhaften Ausführungsform dadurch erreicht werden, dass im Endbereich des Bypasskanals eine Maskierungsstruktur zur Drallerzeugung vorgesehen ist. Eine solche Maskierungsstruktur kann z. B. als Abrisskante für den Gasstrom gestaltet sein.

Im Interesse eines ausreichend geringen Druckabfalls auch bei niedrigen Drehzahlen beträgt ein Strömungsquerschnitt des Bypasskanals nicht weniger als etwa 10% eines Strömungsquerschnitts des Hauptkanals.

Zur Reduzierung der Baugröße des Saugrohrs kann der Strömungsquerschnitt des Bypasskanals so ausgelegt sein, dass er nicht mehr als etwa 60% eines Strömungsquerschnitts des Hauptkanals beträgt. Dabei wird der Effekt berücksichtigt, dass der in dem Hauptkanal angeordnete Wärmetauscher einen Strömungswiderstand erzeugt, so dass bei gleichem Strömungswiderstand der Bypasskanal einen kleineren Querschnitt haben kann.

Erfindungsgemäß der Hauptkanal von dem Bypasskanal mittels einer in dem Gehäuse angeordneten Trennwand getrennt sein, wodurch die Separierung der Kanäle auf einfache Weise erfolgt. Alternativ, jedoch nicht erfindungsgemäß, kann aber auch der Bypasskanal zumindest abschnittsweise als zu dem Hauptkanal separate Rohrführung ausgebildet sein. Eine solche Lösung kann zur individuellen Anpassung an den gegebenen Bauraum bevorzugt sein oder auch um einen besonders langen Bypasskanal auszubilden, um z.B. Resonanzkriterien bei der Gasführung zu berücksichtigen,

In einer vorteilhaften Detailgestaltung ist der Bypasskanal insbesondere bezüglich seiner Länge als Schwingrohr zur Erzeugung einer Resonanz-Aufladung, insbesondere in einem Drehzahlbereich zwischen etwa 1000 und etwa 3000 Umdrehungen pro Minute, ausgebildet. Bei einer solchen Auslegung ist insbesondere in einem unteren Drehzahlbereich, bei dem ein Abgasturbolader wenig Wirkung zeigt, eine gute Gasversorgung des Motors über den Bypasskanal gewährleistet. Bei höheren Drehzahlen, bei denen ein Abgasturbolader die zugeführte Luft wirkungsvoll komprimiert, wird dann bevorzugt auf den Hauptkanal umgeschaltet, mittels dessen über den integrierten Wärmetauscher eine Kühlung der heißen komprimierten Luft erfolgt.

Aus Kostengründen und aus Gründen der Gewichtsersparnis ist das Gehäuse bevorzugt im Wesentlichen aus einem Kunststoff ausgebildet, wobei sich insbesondere ein glasfaserverstärktes Polyamid eignet. Ein solches Gehäuse kann aus mehreren Teilen bestehen, z. B. aus zwei Gehäusehälften, die miteinander reibverschweißt werden. Alternativ kann das Gehäuse aber auch aus einem Metall wie zum Beispiel Aluminium bestehen.

Das Stellglied kann in Strömungsrichtung der Luft vor dem Wärmetauscher angeordnet sein. Erfindungsgemäß ist das Stellglied jedoch nach dem Wärmetauscher angeordnet sein. Im letzten Fall kann das Stellglied in einem bezüglich verschiedener Zylinder separierten Bereich des Saugrohrs angeordnet sein. Hierdurch wird aufgrund der Mehrzahl der Bauteile und Stellklappen ein erhöhter mechanischer Aufwand erforderlich, der aber hinsichtlich der Antriebskräfte verringert ist, da aufgrund der kleinen Einzelquerschnitte der Kanäle insgesamt eine geringere Stellkraft erforderlich ist. Grundsätzlich ist es gewünscht, zwischen Einlassventil und Stellglied ein möglichst geringes Volumen vorzusehen, um ein besonders schnelles Ansprechen der Verbrennung auf eine Änderung des Stellglieds zu gewährleisten.

Zur Vereinfachung der Anordnung kann es vorgesehen sein, dass über das Stellglied im Wesentlichen nur der Bypasskanal verschließbar ist. Aufgrund des Strömungswiderstands des Wärmetauschers im Hauptkanal führt ein Öffnen des den Bypasskanai verschließenden Stellglieds zur überwiegenden Durchströmung des Bypasskanals aufgrund dessen geringen Strömungswiderstandes,

Allgemein vorteilhaft ist das Stellglied zur variabel einstellbaren Verteilung des Luftstroms auf Hauptkanal und Bypasskanal mehrstufig oder auch stufenlos verstellbar ausgebildet.

Bei einer vorteilhaften Ausführungsform wird in einer Betriebsart sowohl der Hauptkanal als auch zumindest ein stromabwärts des Wärmetauschers angeordneter Teil des Bypasskanals von der Luft durchströmt. Hierdurch wird zumindest stromabwärts des Wärmetauschers und insbesondere in einem Bereich vereinzelter Einlasskanäle der erforderliche Bauraum reduziert, da zum Beispiel im Volllastbetrieb sämtliche der Kanäle zur Luftzuführung genutzt werden können.

Bevorzugt kann ein weiteres Stellglied vorgesehen sein, wobei über das Stellglied der Hauptkanal und über das weitere Stellglied der Bypasskanal verschließbar ist. Bei einer solchen Anordnung wird ein erhöhter mechanischer Aufwand getrieben, jedoch kann dann gegebenenfalls auf eine zusätzliche Drosselklappe vollständig verzichtet werden, da nicht nur eine Verteilung der Luft sondern auch eine Einstellung der Gesamtströmungsmenge der Luft ermöglicht ist.

In einfacher und vorteilhafter Detailgestaltung ist das Stellglied als insbesondere mit Verstärkungsrippen versehene Doppelklappe ausgeformt. Eine solche Ausformung ist mechanisch besonders robust. Bei einer besonders vorteilhaften Ausgestaltung bildet ein solches Stellglied unmittelbar das Ende des Bypasskanals aus.

Allgemein vorteilhaft ist zur Steuerung des Gesamtgasstroms in dem Saugrohr eine Drosselklappe angeordnet, insbesondere stromaufwärts des Stellglieds.

Bevorzugt ist der Wärmetauscher mit einem Niedertemperatur-Kühlkreislauf verbunden. Ein solcher Niedertemprratur-Kühlkreislauf umfasst häufig einen eigenen Wärmetauscher im Frontbereich des Fahrzeugs, wobei dann die erzielbare Kühlmitteltemperatur der Außentemperatur entspricht. Der Niedertemperatur-Kühlkreislauf kann auch an einen Hauptkühlkreislauf des Verbrennungsmotors über Stellventile angebunden sein, so dass bei Bedarf eine Erwärmung der Luft, z. B. bei einem Kaltstart, über den Wärmetauscher ermöglicht ist. In einer bevorzugten alternativen oder ergänzenden Ausführungsform kann der Wärmetauscher als Verdampfer eines Kältekreises ausgebildet sein, wobei der Kältekreis insbesondere zu einer Klimaanlage des Kraftfahrzeugs gehört. Hierdurch kann grundsätzlich eine besonders effektive Kühlung erzielt werden, wobei erreichbare Temperaturen auch unterhalb der Außentemperatur liegen können. Eine thermische Anbindung des Niedertemperatur-Kühlkreislaufs an den Kältekreis kann auch über einen zusätzlichen Wärmetauscher außerhalb des Saugrohrs erfolgen.

Allgemein vorteilhaft ist zur Veränderung der Kühlleistung des Wärmetauschers eine Durchströmung des Wärmetauschers mit dem Fluid einstellbar regelbar ausgebildet, Im Allgemeinen handelt es sich bei dem Fluid um ein flüssiges Kühlmittel, das z. B. in seiner Zusammensetzung mit einem Kühlmittel eines Hauptkühlkreislaufs des Verbrennungsmotors ähnlich oder identisch ist.

Das Stellglied ist in bevorzugter Ausführung zur wählbaren Verstellung mit einem Aktuator verbunden. Der Aktuator kann eine Druckdose umfassen, wobei die Druckdose über eine Druckdifferenz zwischen einem Außendruck und dem anliegenden Ladedruck z.B. eines Abgas-Turboladers betätigt wird. Hierdurch ist auf einfache Weise ermöglicht, dass das Stellglied in Abhängigkeit von der Wirkung des Abgas-Turboladers betätigt wird, so dass bei niedrigen Drehzahlen und entsprechend schwach oder gar nicht wirkendem Abgas-Turbolader eine Beströmung des Verbrennungsmotors über den Bypasskanal erfolgt und bei höheren Drehzahlen, bei denen der Abgas-Turbolader eine deutliche Druckerhöhung bewirkt, das Stellglied zur Kühlung des Luftstroms auf den Hauptkanal gestellt wird. Alternativ oder ergänzend kann der Aktuator auch einen elektrischen Antrieb aufweisen und das Stellglied kann z. B. über ein gespeichertes Kennfeld angesteuert werden.

Zur Verbesserung der Betriebssicherheit kann zumindest ein Sensor zur Positionskontrolle des Stellglieds vorgesehen sein.

Bei einer weiteren Ausführungsform der Erfindung ist an dem Saugrohr zudem eine Zuführung für rückgeführtes Abgas angeordnet. Abgasrückführsysteme dienen meist der Reduzierung von Schadstoffen, insbesondere Strickoxiden, und werden sowohl bei Dieselmotoren als auch bei Ottomotoren eingesetzt. Bei einer vorteilhaften Detailgestaltung erfolgt die Zuführung des rückgeführten Abgases separat in den Bypasskanal und/oder den Hauptkanal, um eine besonders flexible Dosierung rückgeführten Abgases je nach Betriebszustand zu ermöglichen. Alternativ kann aber auch eine einfache gleichzeitige Zuführung des Abgases in den Bypasskanal und den Hauptkanal erfolgen.

Bei einer Variante einer Abgasrückführung erfolgt die Zuführung stromabwärts des Wärmetauschers, so dass das Abgas nicht durch den Wärmetauscher des Saugrohrs gekühlt wird. Eine Kühlung des rückgeführten Abgases erfolgt bei einer solchen Variante regelmäßig durch einen separaten Abgaskühler, Alternativ kann es aber auch vorgesehen sein, dass das rückgeführte Abgas stromaufwärts des Wärmetauschers zugeführt wird, so dass der Wärmetauscher zumindest in bestimmten Betriebsarten für eine zusätzliche oder alleinige Kühlung des rückgeführten Abgases sorgt.

Bei einer weiteren vorteilhaften Ausführungsform ist eine Trennung von Bypasskanal und Hauptkanal innerhalb eines Zylinderkopfs des Verbrennungsmotors fortgesetzt. Hierdurch kann das Ende des Bypasskanals besonders nah an die Ventilöffnung geführt werden und ein erfindungsgemäßes Saugrohr kann auch bei Zylinderköpfen mit besonders langen Einlasskanälen vorgesehen werden. Bei einer kostengünstigen und einfachen Detailgestaltung ist die Trennung dabei zumindest teilweise als eine über eine zylinderkopfseitige Anschlussebene in den Zylinderkopf hervorragende Trennwand ausgebildet. Je nach Anforderungen kann zusätzlich oder alternativ ein in einem Einlassbereich des Zylinderkopfs festgelegtes Trennglied vorgesehen sein, zum Beispiel nach Art eines im Einlasskanal eingepreßten Blechteils.

Vorteilhaft ist, dass das Stellglied in einem bezüglich verschiedener Zylinder separierten Bereich des Saugrohrs angeordnet ist.

Vorteilhaft ist, dass über das Stellglied im Wesentlichen nur der Bypasskanal verschließbar ist.

Vorteilhaft ist, dass das Stellglied zur variabel einstellbaren Verteilung des Luftstroms auf Hauptkanal und Bypasskanal mehrstufig oder stufenlos verstellbar ist.

Vorteilhaft ist, dass in einer Betriebsart sowohl der Hauptkanal als auch zumindest ein stromabwärts des Wärmetauschers angeordneter Teil des Bypasskanals von der Luft durchströmt werden.

Vorteilhaft ist, dass ein weiteres Stellglied vorgesehen ist, wobei über das Stellglied der Hauptkanal und über das weitere Stellglied der Bypasskanal jeweils zumindest teilweise verschließbar ist.

Vorteilhaft ist, dass das Stellglied als insbesondere mit Verstärkungsrippen versehene Doppelklappe ausgeformt ist,

Vorteilhaft ist, dass in dem Saugrohr eine Drosselklappe angeordnet ist.

Vorteilhaft ist, dass der Wärmetauscher mit einem Niedertemperatur-Kühlkreislauf verbunden ist.

Vorteilhaft ist, dass der Wärmetauscher als Verdampfer eines Kältekreises ausgebildet ist.

Vorteilhaft ist, dass eine Durchströmung des Wärmetauschers mit dem Fluid einstellbar regelbar ist.

Vorteilhaft ist, dass das Stellglied mit einem Aktuator verbunden ist.

Vorteilhaft ist, dass der Aktuator eine Druckdose umfasst.

Vorteilhaft ist, dass der Aktuator einen elektrischen Antrieb aufweist.

Vorteilhaft ist, dass zumindest ein Sensor zur Positionskontrolle des Stellglieds vorgesehen ist.

Vorteilhaft ist, dass an dem Saugrohr eine Zuführung für rückgeführtes Abgas angeordnet ist.

Vorteilhaft ist, dass die Zuführung separat in den Bypasskanal und/oder den Hauptkanal erfolgt.

Vorteilhaft ist, dass die Zuführung zugleich in den Bypasskanal und den Hauptkanal erfolgt.

Vorteilhaft ist, dass die Zuführung stromabwärts des Wärmetauschers erfolgt

Vorteilhaft ist, dass die Zuführung stromaufwärts des Wärmetauschers erfolgt.

Vorteilhaft ist, dass eine Trennung von Bypasskanal und Hauptkanal innerhalb eines Zylinderkopfs des Verbrennungsmotors fortgesetzt ist.

Vorteilhaft ist, dass die Trennung zumindest teilweise als eine über eine zylinderkopfseitige Anschlussebene in den Zylinderkopf hervorragende Trennwand ausgebildet ist.

Vorteilhaft ist, dass die Trennung als in einem Einiassbereich des Zylinderkopfs festgelegtes Trennglied ausgebildet ist.

Weitere Vorteile und Merkmale der Erfindung ergeben sich aus den nachfolgend beschriebenen Ausführungsbeispielen sowie aus den abhängigen Ansprüchen.

Nachfolgend werden mehrere bevorzugte Ausführungsbeispiele der Erfindung beschrieben und anhand der anliegenden Zeichnungen näher erläutert.
- Fig. 1: zeigt eine schematische Schnittansicht einer Ausführungsform eines Saugrohrs.
- Fig. 2: zeigt eine Draufsicht auf zwei alternative Detailgestaltungen des Ausführungsbeispiels aus Fig. 1.
- Fig. 3: zeigt eine Anzahl alternativer Geometrien eines erfindungsgemäßen Saugrohrs,
- Fig. 4: zeigt eine schematische seitliche Draufsicht eines Ausführungsbeispiels eines Saugrohrs.
- Fig. 5: zeigt eine schematische Draufsicht auf das Ausführungsbeispiel aus Fig. 4 von oben.
- Fig. 6: zeigt das Ausführungsbeispiel aus Fig. 4 mit einer schematischen Darstellung der Luftströmung durch den Hauptkanal.
- Fig. 7: zeigt das Ausführungsbeispiel aus Fig. 4 mit einer schematischen Darstellung der Luftströmung durch den Bypasskanal.
- Fig. 8: zeigt ein weiteres Ausführungsbeispiel eines Saugrohrs mit einem unten liegenden Bypasskanal.
- Fig. 9: zeigt ein weiteres Ausführungsbeispiel eines erfindunggemäßen Saugrohrs mit einem oben liegenden Bypasskanal.
- Fig. 10: zeigt ein weiteres Ausführungsbeispiel eines Saugrohrs mit einem maskierten Bypasskanal,
- Fig. 11: zeigt ein weiteres Ausführungsbeispiel eines Saugrohrs mit einer schaltbaren Maskierung des Bypasskanals.
- Fig. 12: zeigt ein weiteres Ausführungsbeispiel mit einem separat geführten Bypasskanal.
- Fig. 13: zeigt ein weiteres Saugrohr mit einem unten liegenden separat geführten Bypass.
- Fig. 14: zeigt ein weiteres Ausführungsbeispiel der Erfindung mit einem zweiteiligen Stellglied.
- Fig. 15: zeigt eine Abwandlung des Ausführungsbeispiels aus Fig. 14.
- Fig. 16 -18: zeigen jeweils Ausführungsbeispiele eines Saugrohrs mit einer Stellgliedanordnung stromaufwärts des Wärmetauschers.
- Fig. 19: zeigt ein weiteres Ausführungsbeispiel mit zwei Stellgliedern.
- Fig. 20: zeigt ein weiteres Ausführungsbeispiel mit einer Zuführung für rückgeführtes Abgas.
- Fig. 21: zeigt eine weitere Ausführungsform mit einer Zuführung für rückgeführtes Abgas.
- Fig. 22: zeigt eine schematische Darstellung eines erfindungsgemäßen Saugrohrs mit mehreren alternativen Aktuatoren.

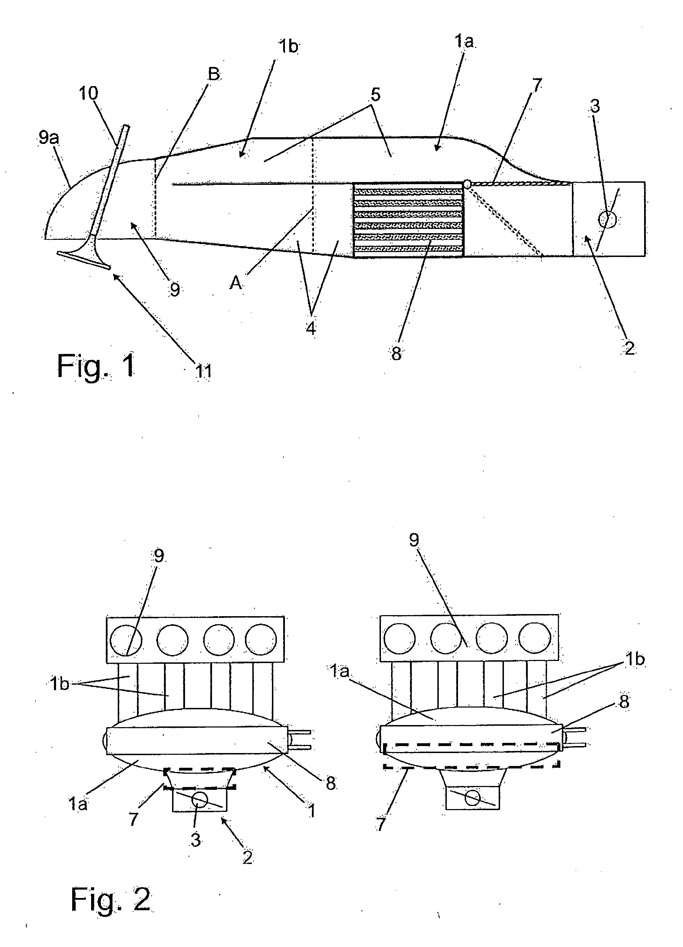

Das in Fig. 1 schematisch im seitlichen Querschnitt gezeigte Saugrohr umfasst ein Gehäuse 1 mit einer Einlassöffnung 2, in der eine Drosselklappe 3 angeordnet ist.

Stromabwärts der Einlassöffnung 2 zweigt von einem Hauptkanal 4 ein Bypasskanal 5 ab, wobei Hauptkanal 4 und Bypasskanal 5 über eine in dem Gehäuse 1 angeordnete Trennwand 6 voneinander separiert sind. Im Bereich des Abzweigs ist ein antreibbares Stellglied 7 vorgesehen, das in einer ersten Endstellung den Luftstrom durch den Hauptkanal 4 leitet und in einer zweiten Endstellung den Luftstrom durch den Bypasskanal 5 leitet.

In dem Hauptkanal 4 ist ein indirekter Ladeluftkühler 8 angeordnet, der von der zugeführten Luft, sofern sie in Abhängigkeit von dem Stellglied 7 durch den Hauptkanal 4 geleitet wird, zur Kühlung durchströmt wird.

Die dem Saugrohr zugeführte Luft wird durch einem Abgas-Turbolader des Verbrennungsmotors komprimiert (nicht dargestellt), Je nach Auslegung des Wärmetauschers 8 kann ein zusätzlicher vorgeschalteter Ladeluftkühler vorgesehen sein, z. B. in Form eines von Außenluft umströmen direkten Ladelufikühlers.

Stellglied 7 und Wärmetauscher 8 sind im vorliegenden Ausführungsbeispiel in einem Plenumsbereich 1b des Saugrohrs angeordnet, welcher stromabwärts in separate einzelne Einlasskanäle 1 b verzweigt. Die Grenze zwischen Plenumsbereich 1a und Einzelkanalbereich 1b ist in der Zeichnung Fig. 1 durch eine gestrichelte Linie A angedeutet. Die Einlasskanäle 1b sind auf an sich bekannte Weise an einem Zylinderkopf 9 des Verbrennungsmotors angeflanscht, wobei eine Grenze zwischen den einzelnen Kanälen 1b und einem jeweiligen Einlassbereich des Zylinderkopfes 9 durch eine gestrichelte Linie B angedeutet ist,

Im Einlassbereich des Zylinderkopfes 9 sind auf bekannte Weise Einlassventile 10 angeordnet. Die Trennwand 6 zur Separierung von Bypasskanal 5 und Hauptkanal 4 erstreckt sich bis weit in die einzelnen Einlasskanäle 1b hinein, so dass der Bypasskanal 5 erst in der Nähe einer Einlassöffnung 11 des Einlassventils 10 endet. Der Bypasskanal 5 ist bezüglich einer Ebene der Ventilöffnung 11 oberhalb des Hauptkanals 4 angeordnet, so dass der durch den Bypasskanal 5 geführte Luftstrom zumindest bei versperrtem Hauptkanal 4 entlang einer gekrümmten Wandung 9a des Einlassbereichs 9 strömt und hauptsächlich auf einer hinteren Seite des Einlassventils 10 in den Zylinder einströmt. Hierdurch wird dem einströmenden Gas ein gemäß Fig. 1 entgegen dem Uhrzeigersinn gerichteter Drall aufgeprägt, so dass sich im Brennraum des Zylinders ein Wirbel bildet. Insbesondere bei niedrigen Drehzahlen im Teillastbetrieb ist eine solche Einströmung des Gases nach Art eines Wirbels zur Verbesserung der Verbrennung vorteilhaft. Ein solcherart ausgebildeter Bypasskanal 5 hat die Eigenschaft eines Tumble- oder Drallkanals, wie er bereits bei herkömmlichen Saugrohren eingesetzt wurde.

Bei einer nicht im Detail dargestellten Ausführungsform kann sich die Trennwand 6 auch bis in den Einlassbereich 9 des Zylinderkopfs, also stromabwärts der Trennebene B zwischen Saugrohr und Zylinderkopf, fortsetzen. Dies kann zum Beispiel in Form von über einen Anschlussflansch des Saugrohrs vorragende zungenartige Fortsätze der Trennwand 6 realisiert sein, die bei einer Montage des Saugrohrs in die Einlassbereiche 9 des Zylinderkopfes eingeführt werden. Alternativ oder ergänzend kann in dem Einlassbereich 9 auch eine von der Trennwand 6 separate, im montierten Zustand an die Trennwand anschließende Trennung angeordnet sein, zum Beispiel in Form eines verpressten Blechteils. Die im Zylinderkopf 9 angeordnete Trennung kann zumindest teilweise einen gebogenen Verlauf haben, der an die Form der Einlassbereich 9, 9a angepasst ist.

Der Kraftstoff kann, insbesondere im Fall von Dieselmotoren, aber auch bei Ottomotoren, direkt eingespritzt werden oder auch an beliebiger Stelle des Saugrohres, je nach bekannten Alternativen nach dem Stand der Technik. Für den Kern der Erfindung ist es nicht wesentlich, an welcher Stelle und auf welche Weise Kraftstoff und Luft zugesetzt werden. Insofern ist unter dem "Ladeluftstrom" im Sinne der Erfindung allgemein auch ein bereits brennbares Gemisch aus Luft und Kraftstoff zu verstehen.

Aus der Draufsicht nach Fig. 2 sind zwei alternative Abwandlungen der Anordnung des Stellglieds 7 ersichtlich. Bei der Abwandlung gemäß der linken Darstellung ist das Stellglied 7 weiter im Zuführbereich 2 angeordnet, wodurch es kleiner ausgelegt werden kann. Bei der rechten Darstellung erstreckt sich das Stellglied im Wesentlichen über die gesamte Breite des Wärmetauschers 8 und ist somit unmittelbar vor der Eintrittsfläche des Wärmetauschers 8 angelenkt.

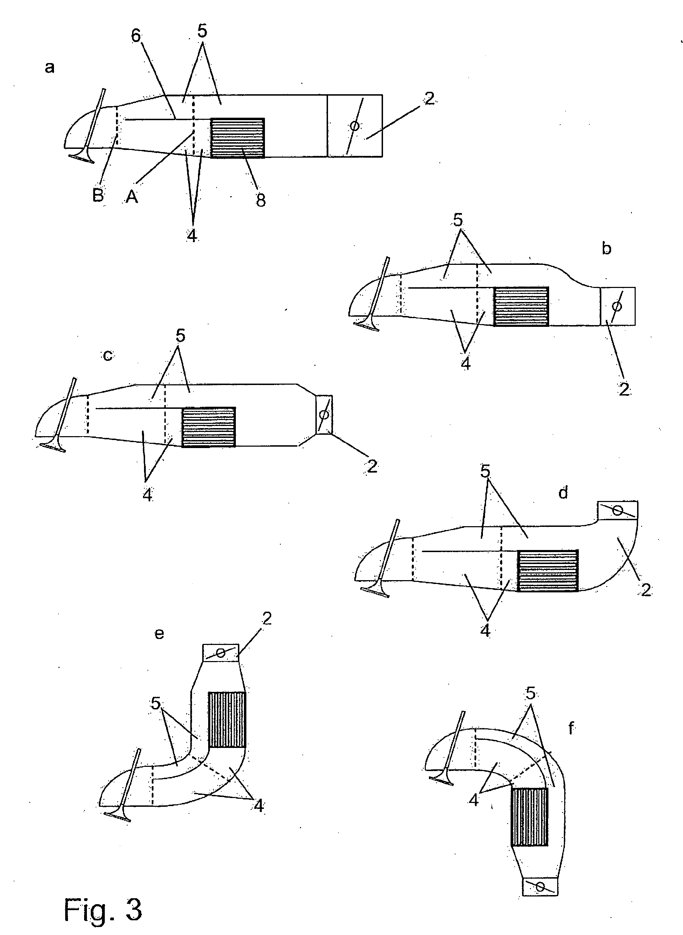

Fig. 3 zeigt sechs verschiedene Abwandlungen der Gehäuseform eines erfindungsgemäßen Saugrohrs, wobei jeweils eine Trennwand 6 bis in unmittelbare Nähe einer Einlassöffnung 11 eines Einlassventils 10 erreicht, so dass der jeweils abgetrennte Bypasskanal 5 eine andere Anströmung im Bereich der Ventilöffnung 11 bewirkt, als es für den Hauptkanal 4 der Fall ist. Der Verlauf der Kanäle 4, 5 kann dabei gerade sein, wie in den Beispielen a, b, c, d oder auch gekrümmt wie in den Beispielen e, f. Wie im Beispiel d gezeigt, kann die zugeführte Ladeluft zunächst eine Umlenkung um 90° Grad erfahren, bevor sie in Hauptkanal 4 und Bypasskanal 5 aufgeteilt wird. Der Zuführbereich 2 kann von unterschiedlichem Durchmesser sein (siehe etwa Version a im Vergleich zu Versionen b ― f). In Fig. 3 wurde jeweils auf die Darstellung eines Stellglieds zur Verteilung der einströmenden Luft auf Hauptkanal 4 oder Bypasskanal 5 aus Gründen der Übersichtlichkeit verzichtet.

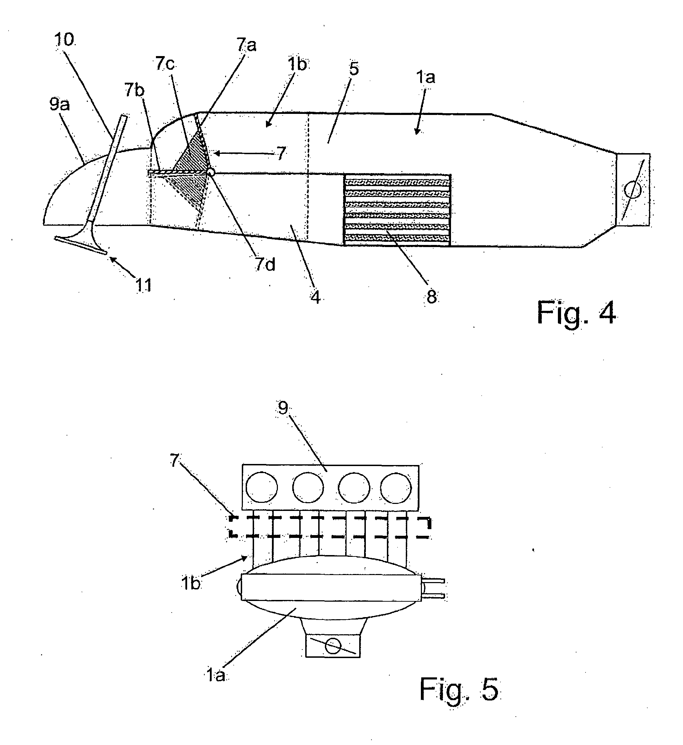

Bei der Ausführungsform nach Fig. 4, deren Draufsicht in Fig. 5 gezeigt ist, ist das Stellglied 7 nicht stromaufwärts des Wärmetauschers 8 angeordnet, sondern in Strömungsrichtung endseitig von Hauptkanal 4 und Bypasskanal 5. Bei dem Stellglied 7 handelt es sich vorliegend um eine Doppelklappe mit einer ersten Klappenfläche 7a und einer zweiten Klappenfläche 7b, die in einem Winkel von etwa 65° Grad zueinander stehen. Zwischen den Klappenflächen 7a, 7b erstrecken Verstärkungsrippen 7c, so dass die Doppelklappe 7 gemäß Fig. 4 besonders stabil ist. Eine Gelenkwelle 7d der Doppelklappe 7 ist im Bereich des Endes der Trennwand 6 angeordnet.

Entsprechend der Anordnung der Doppelklappe 7 am Ende der Kanäle 4, 5 befindet sich die Doppelklappe 7 im Bereich der Vereinzelung der Einlasskanäle 1b unmittelbar vor dem Anschluss an den Zylinderkopf 9. Hierdurch wird für jeden der im vorliegenden schematischen Beispiel vier Zylinder eine eigene Doppelklappe 7 im jeweiligen Einlasskanal 1b erforderlich, Bei der Gelenkwelle 7d kann es sich um eine sämtliche parallele Einlasskanäle 1b durchgreifende einzelne Welle handeln oder auch um jeweils separate Wellen. Insgesamt wird der bauliche Aufwand hinsichtlich der Teilezahl größer, jedoch wird die benötigte Stellkraft aufgrund der jeweils kleinen Querschnitte der vereinzelten Einlasskanäle 1b im Vergleich zu einer großen zentralen Stellklappe kleiner.

Fig. 4 zeigt das Stellglied 7, wie auch im Fall einiger anderer Ausführungsbeispiele, sowohl in einer ersten Volllaststellung als auch einer zweiten Teillaststellung, wobei die Volllaststellung jeweils als durchgezogene Linien und die Teillaststellung als gestrichelte Linien angedeutet sind.

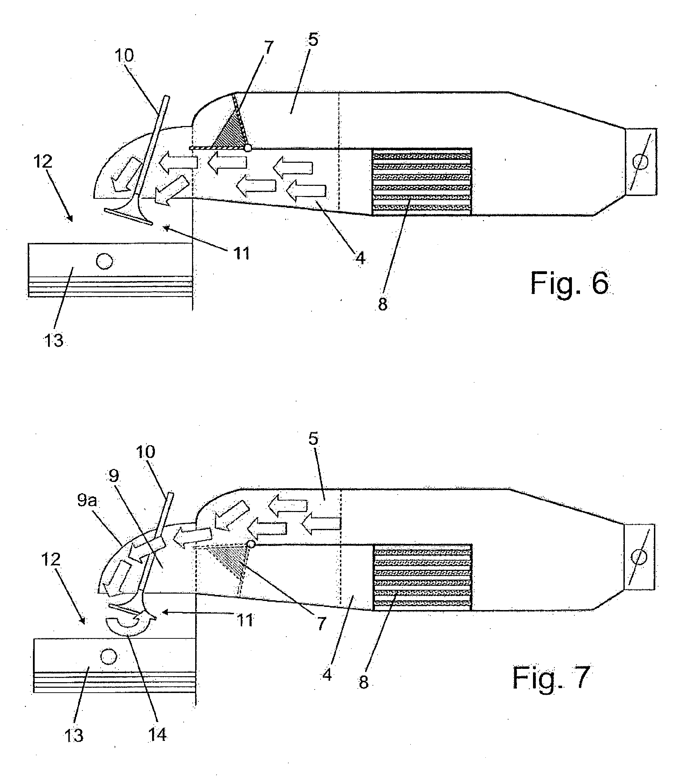

Fig. 6 und Fig. 7 zeigen schematisch den Verlauf der Ladelufiströmung für die beiden Endstellungen des Stellglieds 7 anhand des zuvor beschriebenen Ausführungsbeispiels nach Fig. 4. Im Volllast-Fall gemäß Fig. 6 strömt aufgrund des durch das Stellglied 7 verschlossenen Bypasskanals 5 die gesamte Ladeluft durch den indirekten Ladelufikühler 8 sowie den Hauptkanal 4. Die Luftströmung verteilt sich entsprechend der endseitigen Anordnung des Hauptkanals 4 im Einlassbereich 9 relativ gleichmäßig um das Einlassventil 10 herum und strömt homogen über die Ventilöffnung 11 verteilt in den Brennraum 12 ein. Zur Verdeutlichung ist ein Kolben 3 eines Verbrennungsmotors schematisch dargestellt.

Im Teillast-Fall nach Fig. 7 mit entsprechend umgekehrter Endstellung des Stellglieds 7 strömt die Luft ausschließlich durch den Bypasskanal 5. Das Ende der Stellklappe 7 liegt dabei bereits im Bereich einer Umlenkung des Luftstroms und wirkt wie eine Abrisskante. Zudem führt die gebogene Wandung 9a des Einlassbereichs 9 die durch Pfeile angedeutete Luftströmung auf einem gekrümmten Weg, so dass der Großteil der den Bypass 5 durchströmenden Luft an einem außenseitigen Endbereich der Einlassöffnung 11, das heißt nur auf einer Seite des Ventils 10, in den Brennraum 12 ein. Hierdurch wird eine Tumble- oder Drallströmung im Brennraum erzeugt, die durch einen gekrümmten Pfeil 14 angedeutet ist. Diese Strömung sorgt für eine besonders gute Verwirbelung des eingeströmten Gases, die für den Teillast-Fall bei geringem Ladedruck zur Verbesserung der Verbrennung vorteilhaft ist.

Eine Kühlung der Ladeluftströmung ist im Teillastbetrieb nicht oder nur eingeschränkt erforderlich, da mangels Kompression auch keine wesentliche Erwärmung der Luft auftritt. Vielmehr ist für diesen Fall eine gewisse Mindesttemperatur der Luft gewünscht, um eine gute Verdampfung und Verteilung des Kraftstoffs sicherzustellen. Entsprechend wäre eine zu starke Kühlung der Luft bei niedrigen Drehzahlen unerwünscht, so dass die Umgehung des Ladeluftkühlers durch den Bypass vorteilhaft ist.

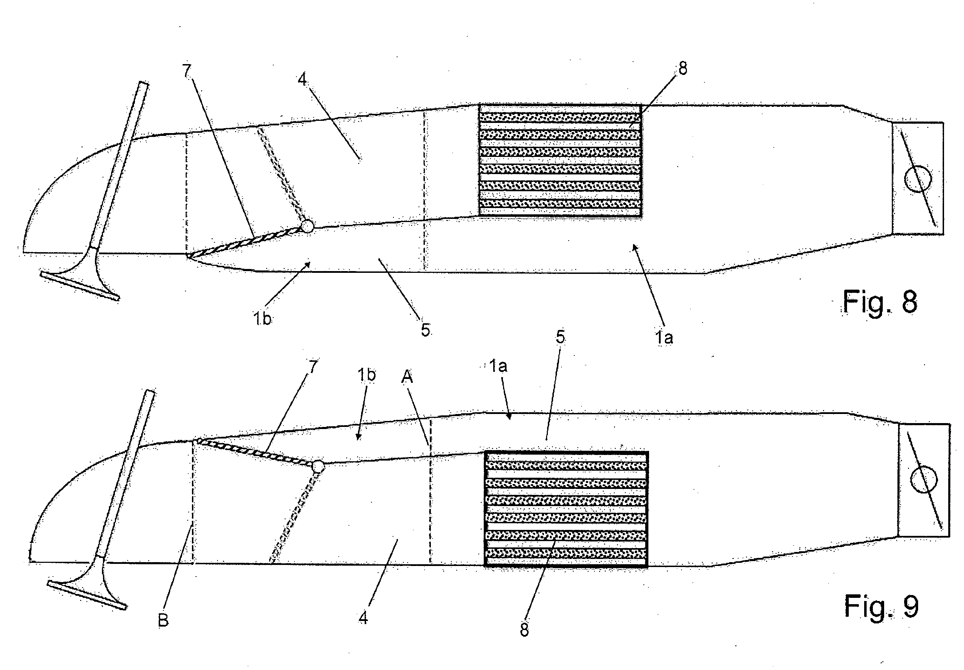

Das Ausführungsbeispiel nach Fig. 8 zeigt eine Abwandlung eines erfindungsgemäßen Saugrohrs, bei der der Bypasskanal 5 bezüglich einer Ebene der Einlassöffnung 11 unterhalb des Hauptkanals 4 verläuft. Auch im Beispiel nach Fig. 8 ist das Stellglied 7 am einlassventilseitigen Ende der Trennwand 6 angeordnet. Bei dem Beispiel nach Fig. 8 kann die Anströmung des Einlassventils 10 besonders im Volllastbetrieb aufgrund eines geraden Strömungsverlaufs optimal erfolgen, wie aus der Geometrie der Kanäle ersichtlich ist.

Alternativ kann aber auch gemäß dem Beispiel nach Fig. 9 der Bypasskanal 5 oberhalb des Hauptkanals 4 angeordnet sein.

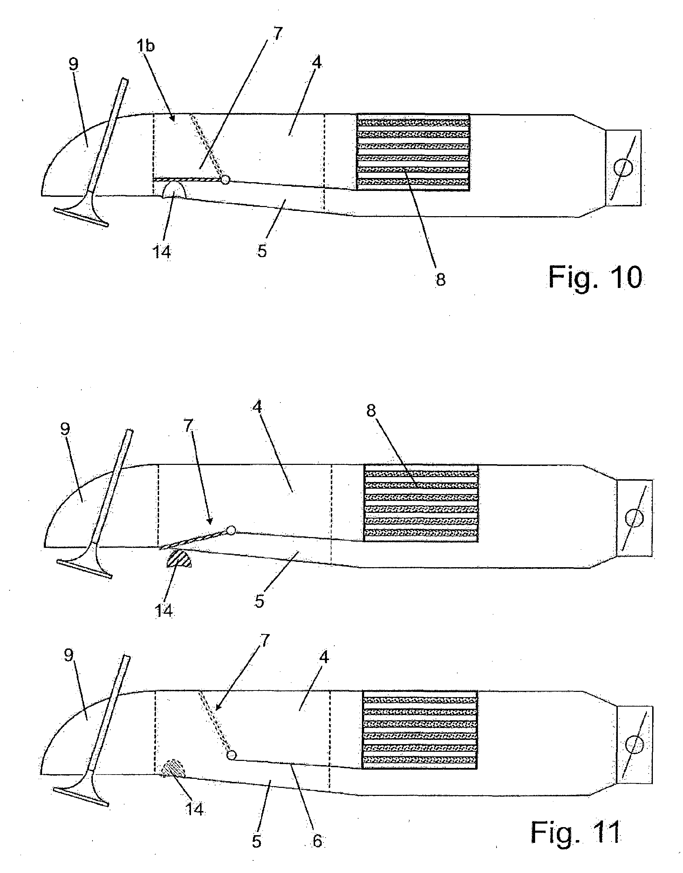

Bei der Ausführungsform nach Fig. 10 ist der Bypasskanal 5 unterhalb des Hauptkanals 4 angeordnet und weist eine Maskierung 14 auf. Bei der Maskierung 14 handelt es sich um eine gezielt ausgeformte Abrisskante für die Luftströmung durch den Bypasskanal 5, so dass die nicht dargestellte Luftströmung ähnlich die in der Darstellung nach Fig. 7 hauptsächlich auf der äußeren Seite des Einlassventils 10 verläuft.

In Fig. 11 ist eine Abwandlung zur Darstellung nach Fig. 10 gezeigt, bei der die als Abrisskante 14 ausgebildete Maskierung zusätzlich verstellbar ausgebildet ist. In der oberen Abbildung ist der oben liegende Hauptkanal 4 aktiviert, wobei die Maskierung 14 versenkt ist, so dass das Stellglied 7 einen noch weiteren Öffnungswinkel als im Fall der Ausführung nach Fig. 10 annehmen kann. Hierdurch kann die Luftströmung für den Volllastbetrieb besonders günstig verlaufen.

Wird das Stellglied 7 im Teillastbetrieb umgestellt, so hat die Abrisskante 14 eine andere Stellung, bei der sie in den Bypasskanal 5 hineinragt. Eine solche verstellbare Abrisskante 14 kann z. B. auf einfache Weise durch federnde Mittel bereitgestellt werden oder auch gezielt durch Aktuatoren verstellt werden.

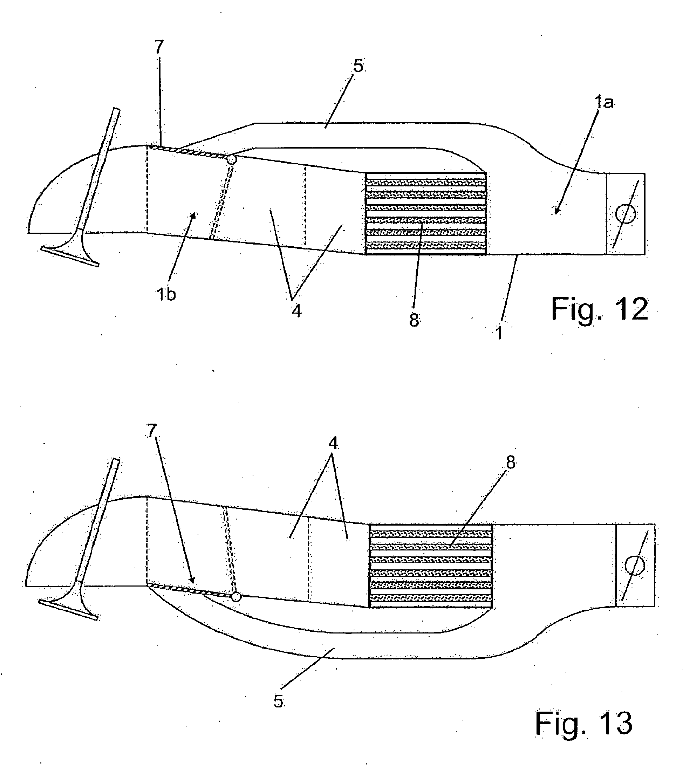

Die Beispiele nach Fig. 12 und Fig. 13 zeigen jeweils Versionen eines erfindungsgemäßen Saugrohrs, bei denen der Bypasskanal 5 einen von dem Hauptkanal 4 unabhängigen Verlauf aufweist. Der Bypasskanal 5 ist dabei nach Art einer separaten Rohrführung ausgeformt. Die Rohrführung kann in einem tatsächlich zu dem Gehäuse 1 separierten Rohrteil bestehen oder kann, wie dargestellt, auch eine entsprechende Ausformung des Gehäuses 1 sein. Grundsätzlich ist hierdurch eine Optimierung von Länge und Form des Bypasskanals 5 möglich, mit der insbesondere ein Schwingrohreffekt zur Resonanz-Aufladung im Teillastbetrieb optimierbar ist.

Bei der Version nach Fig. 12 ist der Bypasskanal 5 oberhalb des Hauptkanals 4 angeordnet und bei der Version nach Fig. 13 unterhalb.

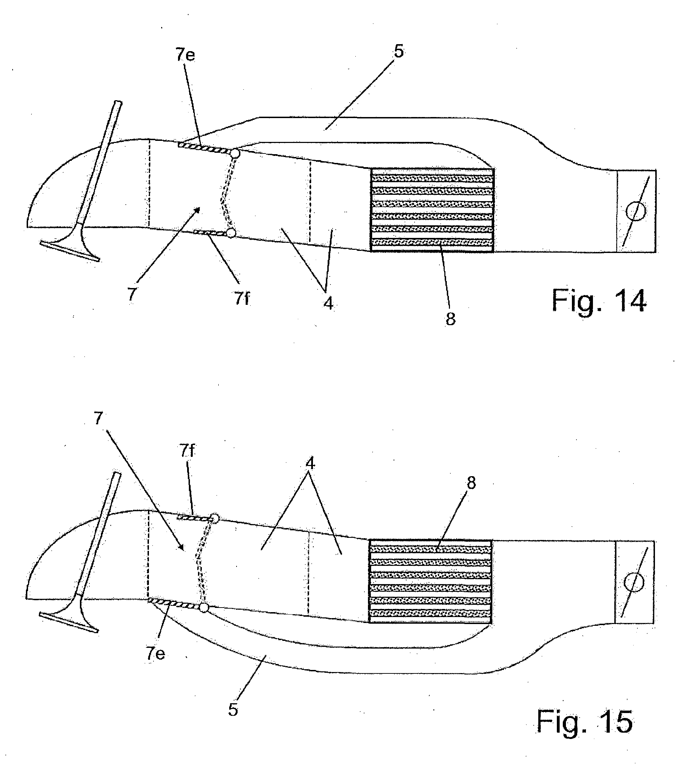

Fig. 14 und Fig. 15 zeigen jeweils Abwandlungen der Ausführungsbeispiele nach Fig. 12 bzw. Fig, 13. Die Abwandlung besteht jeweils darin, dass nicht eine einzelne Stellklappe 7 (siehe Fig. 12, Fig. 13) vorgesehen ist, sondern ein zweiteiliges Stellglied mit einer ersten Teilklappe 7e und einer zweiten Teilklappe 7f. Die erste Teilklappe 7e kann in der Volllaststellung vollständig den Bypasskanal 5 verschließen. Die zweite Teilklappe 7f dient in der Teillaststellung dem vollständigen Verschließen des Hauptkanals 4, wobei die erste Teilklappe 7e nur teilweise in den Hauptkanal 4 hineinragt und von der an der gegenüberliegenden Wandung angelenkten Teilklappe 7f zur vollständigen Verschließung ergänzt wird. Insbesondere bei dieser Ausführungsform kann eine geeignete Formgebung einer der Teilklappen zudem eine Maskierung des Bypasskanals 5 zur Drallerzeugung bewirken. Die Teilklappen 7e, 7f können separate Aktuatoren aufweisen oder auch jeweils einen gemeinsamen Aktuator, wobei die Teilklappen 7e 7f mechanisch über eine Zwangssteuerung wie zum Beispiel ein Gestänge miteinander verbunden sein können. Die Aufteilung des Stellglieds 7 in Teilklappen 7e, 7f bringt zudem Vorteile hinsichtlich der erforderlichen Antriebskräfte.

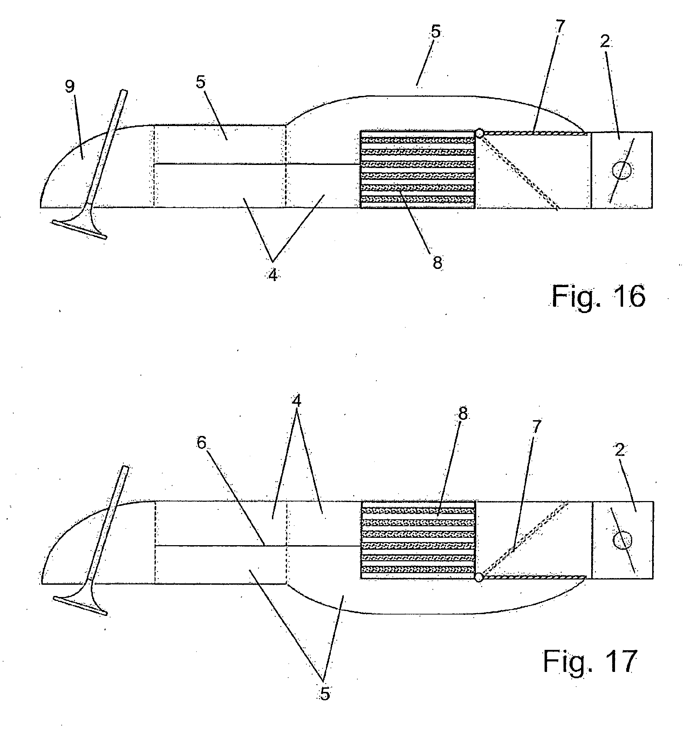

Bei dem Ausführungsbeispiel nach Fig. 16 ist eine dem Ausführungsbeispiel nach Fig. 1 ähnliche Anordnung des Stellglieds 7 vorgesehen, wobei die Trennwand 6 nicht den gesamten Wärmetauscher 8 von dem Bypasskanal 5 abtrennt, sondern nur einen Teil seiner Eintrittsfläche. Das Stellglied 7 ist dabei so angeordnet, dass in der Volllaststellung der Bypasskanal 5 eingangsseitig vollständig verschlossen wird. Austrittsseitig bzw. stromabwärts des Wärmetauschers 8 strömt die komprimierte Luft jedoch teilweise durch den Bypasskanal 5 und teilweise durch den Hauptkanal 4, wodurch der Bauraum im Betriebszustand großen Luftdurchsatzes optimal genutzt wird. In der Teillaststellung ist der Zutritt zum Wärmetauscher 8 vollständig verschlossen, so dass die Ladeluft vollständig durch den Bypasskanal 5 strömt.

Bei der Variante nach Fig. 17 handelt es sich um eine zu Fig. 16 ähnliche Anordnung mit dem Unterschied, dass der Bypasskanal 5 unterhalb des Hauptkanals 4 vorgesehen ist.

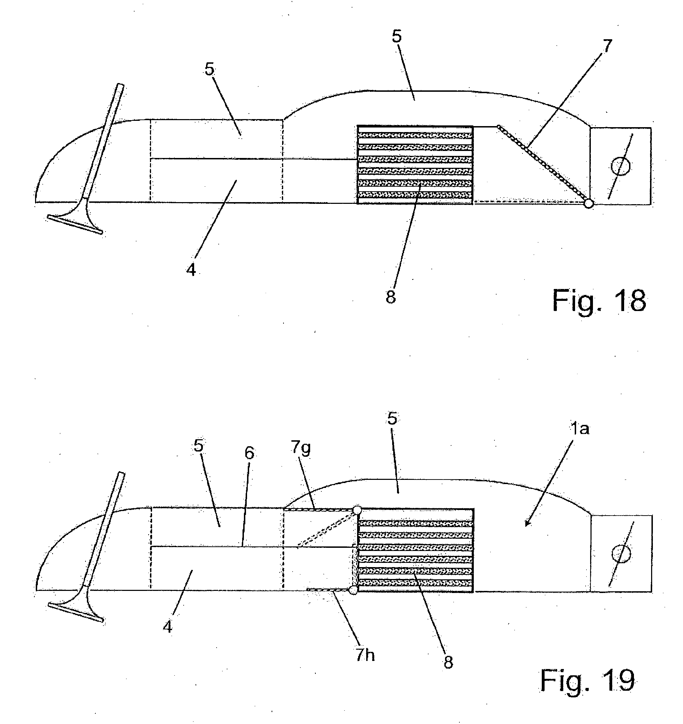

Fig. 18 zeigt ein Ausführungsbeispiel, das dem von Fig. 16 ähnlich ist. Im Unterschied ist jedoch das Stellglied 7 nicht im Bereich des Wärmetauschers 8 angelenkt, sondern beabstandet vom Wärmetauscher 8 an der Gehäusewandung. Dabei unterstützt ein ansteigender Ladedruck die Öffnungsbewegung des Stellglieds 7, wogegen im Ausführungsbeispiel nach Fig. 16 bei ansteigendem Ladedruck eine erhöhte Öffnungskraft erforderlich ist.

Bei dem Ausführungsbeispiel nach Fig. 19 unterteilt die Trennwand 6 den Wärmetauscher 8 austrittsseitig ebenso wie bei den Ausführungsbeispielen nach Fig. 16 bis Fig. 18 in verschiedene Teilströme, wobei auch der stromabwärts des Wärmetauschers angeordnete Teil des Bypasskanals 5 von gekühlter Luft durchströmt werden kann bzw. in einer Volllaststellung mit genutzt wird. Hauptunterschied zu den vorhergehenden Ausführungsbeispielen ist die Anordnung eines ersten Stellglieds 7g und eines weiteren Stellglieds 7h unmittelbar stromabwärts des Wärmetauschers 8. Das erste Stellglied 7g ist im Bypasskanal 5 angeordnet und das zweite Stellglied 7h ist im Hauptkanal 4 angeordnet. Bei Teillast kann dabei der Hauptkanal 4 insgesamt vollständig verschlossen und der Bypasskanal geöffnet werden (beide Stellglieder bzw. Stellklappen 7g, 7h in gestrichelter Position). Bei Volllast verschließt das erste Stellglied 7g einen zu dem Wärmetauscher parallelen Abschnitt des Bypasskanals und gibt zugleich einen Teil der Austrittsfläche des Wärmetauschers 8 frei, der in den stromabwärts der Stellklappe liegenden Teil des Bypasskanals 5 mündet. Bei Vollaststellung werden somit stromabwärts des Wärmetauschers 8 sowohl Hauptkanal 4 als auch Bypasskanal 5 durchströmt.

Bei einer möglichen Abwandlung der Ausführungsform nach Fig. 19 könnte auch auf die eine Stellklappe 7h verzichtet werden, so dass im Teillastbetrieb ein Teil des Luftstroms durch den Wärmetauscher 8 und den Hauptkanal 4 strömt. Aufgrund des höheren Druckabfalls über dem Wärmetauscher 8 wird aber der weit überwiegende Teil des Luftstroms durch den Bypasskanal 5 strömen.

Bei einer weiteren möglichen Abwandlung einer Ausführungsform mit zwei Stellgliedern (nicht dargestellt) könnte ein erstes Stellglied den Bypasskanal einstellbar verschließen und ein zweites Stellglied den Hauptkanal einstellbar verschließen, so dass sowohl eine Einstellung der Strömungswege als auch eine Einstellung der Gesamtströmung für die einzelnen Betriebsarten ermöglicht ist. Hierdurch könnte dann gegebenenfalls auf eine Drosselklappe 3 verzichtet werden.

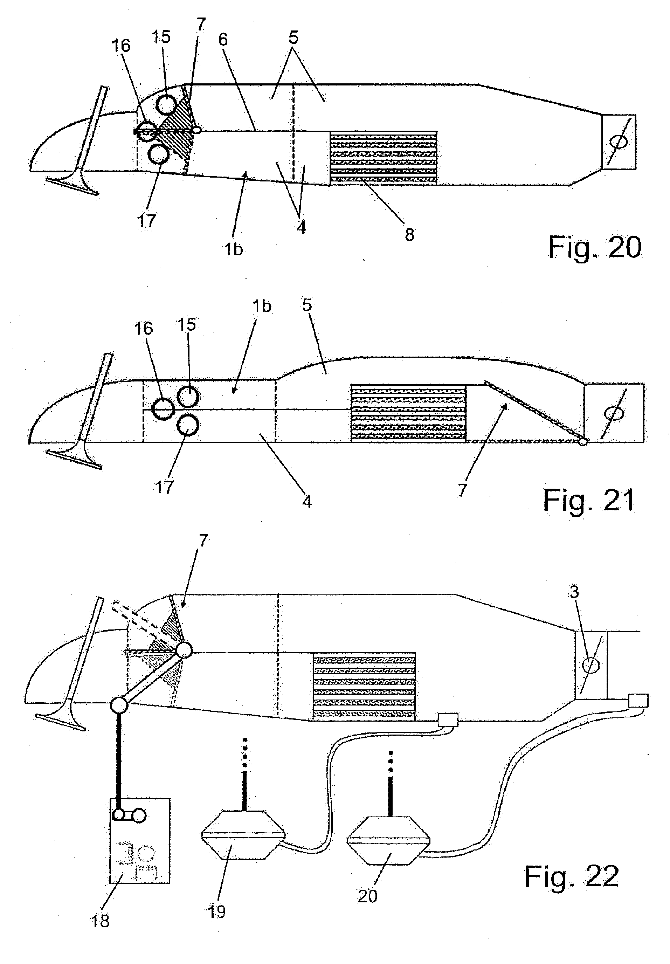

Das Ausführungsbeispiel nach Fig. 20 entspricht weitgehend dem nach Fig. 4, wobei zusätzlich im Bereich der vereinzelten Einlasskanäle 1b und der Doppelklappe 7 Zuführungen 15, 16, 17 für rückgeführtes Abgas vorgesehen sind. Die Zuführung 15 führt dabei ausschließlich in den Bypasskanal 5, die Zuführung 17 führt ausschließlich in den Hauptkanal 4 und die Zuführung 16 führt gleichzeitig in beide Kanäle 4, 5. Je nach Anforderung kann eine Zuführung für rückgeführtes Abgas eine oder mehrere der Zuführungen 15, 16, 17 aufweisen.

Das Ausführungsbeispiel nach Fig. 21 entspricht dem nach Fig. 20, wobei das Stellglied 7 wie im Ausführungsbeispiel nach Fig. 18 ausgebildet und stromaufwärts des Wärmetauschers 8 angeordnet ist.

Bei einer nicht gezeigten Abwandlung kann die Zuführung des rückgeführten Abgases stromaufwärts des Wärmetauschers 8 erfolgen, so dass das rückgeführte Abgas durch den Wärmetauscher 8 mitgekühlt wird.

Das Ausführungsbeispiel nach Fig. 22 entspricht dem nach Fig. 4, wobei schematisch alternative Aktuatoren zur kraftunterstützten Verstellung des Stellglieds 7 gezeigt sind. Es kann sich dabei um einen elektromechanischen und insbesondere von einer Steuerelektronik angesteuerten Aktuator 18 handeln oder alternativ oder ergänzend um Aktuatoren 19, 20, die als Druckdosen ausgebildet sind. Dabei ist die Druckdose 19 stromabwärts der Drosselklappe 3 druckbeaufschlagt, was als "Unterdruckbetätigung" bezeichnet werden kann. Die hierzu alternative Druckdose 20 ist stromaufwärts der Drosselklappe 3 angeschlossen, was als "Ladedruckbetätigung" bezeichnet werden kann.

Die verschiedenen speziellen Merkmale der Ausführungsbeispiele können je nach Anforderungen auf sinnvolle Weise miteinander kombiniert werden.

## Patentansprüche

1. Saugrohr für einen Verbrennungsmotor, umfassend
ein Gehäuse (1) mit einer Zuführung (2) für insbesondere komprimierte Luft,
einen in dem Gehäuse (1) in einem Hauptkanal (4) angeordneten Wärmetauscher (8), der von der Luft zum Wärmetausch mit einem Fluid durchströmbar ist, und
einen zumindest abschnittsweise von dem Hauptkanal (4) getrennten Bypasskanal (5) mit zumindest einem Stellglied (7) zur einstellbaren Umgehung des Wärmetauschers (8) durch die zugeführte Luft,
**dadurch gekennzeichnet,**
**dass** ein motorseitiges Ende des Bypasskanals (5) einen noch strömungsrelevant kleinen Abstand von einer Öffnung (11) eines Einlassventils (10) des Verbrennungsmotors aufweist, wobei der Bypasskanal (5) unmittelbar vor einer gekrümmt verlaufenden Wandfläche (9a) eines Einlassbereichs (9) des Verbrennungsmotors endet und der Bypasskanal (5) bezüglich einer Öffnungsebene des Einlassventils (10) oberhalb des Hauptkanals (4) angeordnet ist, der Hauptkanal (4) von dem Bypasskanal (5) mittels einer in dem Gehäuse angeordneten Trennwand (6) getrennt ist und das Stellglied (7) in Strömungsrichtung der Luft nach dem Wärmetauscher (8) angeordnet ist.

2. Saugrohr nach Anspruch 1, **dadurch gekennzeichnet, dass** der Abstand nicht mehr als etwa das Siebenfache, insbesondere nicht mehr als etwa das Vierfache eines Durchmessers des Einlassventils (10) beträgt.

3. Saugrohr nach einem der vorhergehenden Ansprüche, **dadurch gekennzeichnet, dass** der Bypasskanal (5) als Tumble- oder Drallkanal des Saugrohrs ausgebildet ist.

4. Saugrohr nach einem der vorhergehenden Ansprüche, **dadurch gekennzeichnet, dass** im Endbereich des Bypasskanals (5) eine Maskierungsstruktur (14) vorgesehen ist.

5. Saugrohr nach einem der vorhergehenden Ansprüche, **dadurch gekennzeichnet, dass** ein Strömungsquerschnitt des Bypasskanals (5) nicht weniger als etwa 10% eines Strömungsquerschnitts des Hauptkanals (4) beträgt.

6. Saugrohr nach einem der vorhergehenden Ansprüche, **dadurch gekennzeichnet, dass** ein Strömungsquerschnitt des Bypasskanals (5) nicht mehr als etwa 60% eines Strömungsquerschnitts des Hauptkanals (4) beträgt.

7. Saugrohr nach einem der vorhergehenden Ansprüche, **dadurch gekennzeichnet, dass** der Bypasskanal (5) insbesondere bezüglich seiner Länge als Schwingrohr zur Erzeugung einer Resonanz-Aufladung, insbesondere in einem Drehzahlbereich zwischen etwa 1000 und etwa 3000 Umdrehungen pro Minute, ausgebildet ist.

8. Saugrohr nach einem der vorhergehenden Ansprüche, **dadurch gekennzeichnet, dass** das Gehäuse (1) im Wesentlichen aus einem Kunststoff, insbesondere einem glasfaserverstärkten Polyamid, ausgebildet ist.

9. Saugrohr nach einem der vorhergehenden Ansprüche, **dadurch gekennzeichnet, dass** das Stellglied (7) in Strömungsrichtung der Luft vor dem Wärmetauscher (8) angeordnet ist.

## Claims

1. An intake manifold for an internal combustion engine, comprising
a housing (1) having a feed (2) for air, in particular compressed air,
a heat exchanger (8), which is arranged in the housing (1) in a main duct (4) and through which the air can flow for heat exchange with a fluid, and
a bypass duct (5), which is divided from the main duct (4) at least over portions and has at least one control element (7) to enable the fed air to bypass the heat exchanger (8) in an adjustable manner, **characterized in that**
an engine-side end of the bypass duct (5) is at a short distance from an opening (11) of an inlet valve (10) of the internal combustion engine, said distance still being relevant to the flow, wherein the bypass duct (5) ending immediately ahead of a curved wall surface (9a) of an inlet region (9) of the internal combustion engine, and the bypass duct (5) being arranged above the main duct (4) in relation to an opening plane of the inlet valve (10), the main duct (4) being divided from the bypass duct (5) by means of the dividing wall (6) arranged in the housing, and the control element (7) being arranged after the heat exchanger (8) in the direction of flow of the air.

2. The intake manifold as claimed in claim 1, **characterized in that** the distance is no more than about seven times, in particular no more than about four times, a diameter of the inlet valve (10).

3. The intake manifold as claimed in one of the preceding claims, **characterized in that** the bypass duct (5) is designed as a tumble duct or swirl duct of the intake manifold.

4. The intake manifold as claimed in one of the preceding claims, **characterized in that** a masking structure (14) is provided in the end region of the bypass duct (5).

5. The intake manifold as claimed in one of the preceding claims, **characterized in that** a flow cross-section of the bypass duct (5) is no less than approximately 10% of a flow cross-section of the main duct (4).

6. The intake manifold as claimed in one of the preceding claims, **characterized in that** a flow cross-section of the bypass duct (5) is no more than approximately 60% of a flow cross-section of the main duct (4).

7. The intake manifold as claimed in one of the preceding claims, **characterized in that** the bypass duct (5) is designed, in particular with regard to its length, as an oscillation tube for the generation of resonance-type pressure charging, in particular in an engine speed range between about 1000 and about 3000 revolutions per minute.

8. The intake manifold as claimed in one of the preceding claims, **characterized in that** the housing (1) is formed substantially from a plastic, in particular a glass-fiber reinforced polyamide.

9. The intake manifold as claimed in one of the preceding claims, **characterized in that** the control element (7) is arranged ahead of the heat exchanger (8) in the direction of flow of the air.

## Revendications

1. Collecteur d'admission pour un moteur à combustion interne, comprenant
un carter (1) comportant une alimentation (2) pour de l'air en particulier comprimé,
un échangeur de chaleur (8) disposé dans un conduit principal (4) placé dans le carter (1), lequel échangeur de chaleur peut être traversé par l'air servant à l'échange de chaleur avec un fluide, et
un conduit de dérivation (5) séparé au moins partiellement du conduit principal (4), ledit conduit de dérivation comprenant au moins un élément de réglage (7) servant au contournement réglable de l'échangeur de chaleur (8) par l'air fourni, **caractérisé**
**en ce qu'**une extrémité - côté moteur - du conduit de dérivation (5) présente un faible intervalle - encore important concernant l'écoulement - par rapport à une ouverture (11) d'une soupape d'admission (10) du moteur à combustion interne, où le conduit de dérivation (5) se termine juste avant une surface de paroi (9a) - s'étendant de façon incurvée - d'une zone d'admission (9) du moteur à combustion interne, et le conduit de dérivation (5) est disposé au-dessus du conduit principal (4), par rapport à un plan d'ouverture de la soupape d'admission (10), le conduit principal (4) est séparé du conduit de dérivation (5) au moyen d'une paroi de séparation (6) disposée dans le carter et l'élément de réglage (7) est disposé, suivant la direction d'écoulement de l'air, en aval de l'échangeur de chaleur (8).

2. Collecteur d'admission selon la revendication 1, **caractérisé en ce que** l'intervalle n'est pas de plus du septuple, environ, en particulier pas de plus du quadruple, environ, d'un diamètre de la soupape d'admission (10).

3. Collecteur d'admission selon l'une ou l'autre des revendications précédentes, **caractérisé en ce que** le conduit de dérivation (5) est configuré comme un conduit du collecteur d'admission, à effet mélangeur ou à effet tourbillonnant.

4. Collecteur d'admission selon l'une quelconque des revendications précédentes, **caractérisé en ce qu'**une structure de masquage (14) est prévue dans la zone d'extrémité du conduit de dérivation (5).

5. Collecteur d'admission selon l'une quelconque des revendications précédentes, **caractérisé en ce qu'**une section d'écoulement du conduit de dérivation (5) n'est pas de moins de 10 % environ inférieure à une section d'écoulement du conduit principal (4).

6. Collecteur d'admission selon l'une quelconque des revendications précédentes, **caractérisé en ce qu'**une section d'écoulement du conduit de dérivation (5) n'est pas de plus de 60 % environ supérieure à une section d'écoulement du conduit principal (4).

7. Collecteur d'admission selon l'une quelconque des revendications précédentes, **caractérisé en ce que** le conduit de dérivation (5) est réalisé, en particulier par rapport à sa longueur, comme un tube à résonance servant à la production d'une suralimentation par résonance, en particulier dans une plage de vitesses de rotation comprises entre 1.000 tours environ et 3.000 tours environ par minute.

8. Collecteur d'admission selon l'une quelconque des revendications précédentes, **caractérisé en ce que** le carter (1) est réalisé essentiellement dans une matière plastique, en particulier dans un polyamide renforcé par des fibres de verre.

9. Collecteur d'admission selon l'une quelconque des revendications précédentes, **caractérisé en ce que** l'élément de réglage (7) est disposé, suivant la direction d'écoulement de l'air, en amont de l'échangeur de chaleur (8).
